# EUROPEAN PATENT APPLICATION

(11) **EP 4 343 876 A1**
(43) Date of publication of application: **27.03.2024**
(21) Application number: 22938735.2
(22) Date of filing: 25.07.2022
(51) Int. Cl.: H01M 4/02, H01M 4/64

(54) **CURRENT COLLECTOR, ELECTRODE SHEET, BATTERY CELL, BATTERY, AND ELECTRICAL DEVICE**

(71) Applicant: Contemporary Amperex Technology Co., Limited, Ningde,Fujian 352100 (CN)
(72) Inventor: SUN, Xin, Ningde Fujian 352100 (CN); LIU, Huanji, Ningde Fujian 352100 (CN); CHEN, Xiao, Ningde Fujian 352100 (CN); YIN, Ziyi, Ningde Fujian 352100 (CN); JIN, Haizu, Ningde Fujian 352100 (CN)
(74) Representative: Gong, Jinping
(86) International application number: PCT/CN2022/107647
(87) International publication number: WO 2024/020730

(57) **Abstract**

The present application relates to a current collector (J1), an electrode plate (23J), a battery cell (20), a battery (100), and an electric device. The current collector (J1) includes a stainless steel current-collecting portion (J11) for collecting a current, where the stainless steel current-collecting portion (J11) includes a blank area (q) and a coating area (t) that are arranged adjacent to each other in a preset direction (F), the coating area (t) is configured to be coated with an active material, and the blank area (q) has a hardness less than that of the coating area (t).

## Description

### TECHNICAL FIELD

The present application relates to the technical field of batteries, and in particular, to a current collector, an electrode plate, a battery cell, a battery, and an electric device.

### BACKGROUND

Preparation of an electrode plate in a battery cell requires a current collector. The current collector is configured to be coated with an active material, collect and output a current generated by the active material, and input an external (such as an electrode terminal of the battery cell) current to the active material. Therefore, the current collector is usually required to have good electrical conductivity, desirable chemical and electrochemical stability, and high mechanical strength.

Copper current collectors and aluminum current collectors are widely used as current collectors of electrode plates because of their ease of processing and suitable mechanical strength and proper costs and other favorable factors. However, the copper current collectors are prone to oxidization when used as cathode current collectors. The aluminum current collectors are prone to corrosion when used as anode current collectors. Therefore, the copper current collectors can only be used for negative electrodes and the aluminum current collectors can only be used for positive electrodes. In related technologies, a current collector made of stainless steel is universal, but has poor machinability.

### SUMMARY

In view of the above problems, the present application provides a current collector, an electrode plate, a battery cell, a battery, and an electric device, aiming at solving the problem of poor machinability of an existing stainless steel current collector.

In a first aspect, the present application provides a current collector. The current collector includes a stainless steel current-collecting portion for collecting a current, where the stainless steel current-collecting portion includes a blank area and a coating area that are arranged adjacent to each other in a preset direction, the coating area is configured to be coated with an active material, and the blank area has a hardness less than that of the coating area.

In the technical solution of the embodiment of the present application, the current collector achieves a current collecting function by the stainless steel current-collecting portion, and the current collector may be configured to prepare both a positive electrode plate and a negative electrode plate due to the characteristics of the stainless steel current-collecting portion, so that the current collector has certain universality. In addition, since the blank area has a hardness less than that of the coating area, the blank area has a tensile strength less than that of the coating area and the blank area has a ductility better than that of the coating area, when the active material is rolled, the blank area can be extended as the coating area is extended, so that microcracks/crow's feet and other undesirable phenomena will not be formed at the junction of the blank area and the coating area, and thus the current collector has good machinability.

In some embodiments, the coating area has a tensile strength δb 1 ≥ 800 MPa, and the coating area has a ductility D1 ≤ 1%. In this case, stainless steel in the coating area is hard stainless steel, which has a high hardness and a low preparation cost, thus improving compaction resistance of the current collector and reducing the preparation cost.

In some embodiments, the blank area has a tensile strength δb2≤ 450 MPa, and the blank area has a ductility D2 ≥ 3%. In this case, stainless steel in the blank area is soft stainless steel, which has a good ductility. When the current collector rolls the active material, the soft stainless steel in the blank area can extend as the stainless steel in the coating area extends, which can effectively prevent the formation of microcracks/crow's feet and other undesirable phenomena at the junction of the blank area and the coating area. In addition, the stainless steel in the blank area is the soft stainless steel, which has a low hardness, and is easier to cut during die-cutting in the blank area to form a tab. In addition, during welding, the soft stainless steel needs low welding energy and is easier to weld. Therefore, the tab made of the soft stainless steel is easier to weld.

In some embodiments, the blank area includes a first area and a second area that are arranged adjacent to each other in a preset direction, where the first area is connected between the coating area and the second area, the first area has a hardness different from that of the second area, and the first area has a hardness less than that of the coating area. In this case, the current collector can perform, only by changing the hardness of the first area, improvement against microcracks/crow's feet and other undesirable phenomena that are prone to occur at the junction of the blank area and the coating area during rolling, the hardness of the stainless steel in the second area can be flexibly set, and the arrangement of the current collector is more flexible.

In some embodiments, the second area has a same hardness as the coating area. In this case, hardness reduction treatment (complete annealing treatment or incomplete annealing treatment) may be performed on the stainless steel blank only in the first area based on the same stainless steel blank, so that the current collector is easier to process and has a lower cost.

In some embodiments, a tensile strength 6b22 of the second area and a tensile strength δb1 of the coating area meet δb22 = δb1 > 450 MPa; and a ductility D22 of the second area and a ductility D1 of the coating area meet D22 = D1 < 3%. In this case, the second area has a same hardness as the coating area. During actual processing, hardness reduction treatment (complete annealing treatment or incomplete annealing treatment) may be performed only on a part of the first area based on a stainless steel blank, and the current collector is easier to prepare and has a lower cost.

In some embodiments, the hardness of the first area < the hardness of the second area < the hardness of the coating area. In this case, the occurrence of microcracks and other undesirable phenomena at the junction of the first area and second area is prevented, and the tab is not prone to be deformed by an external force, which helps to maintain the shape of the tab.

In some embodiments, the tensile strength δb1 of the coating area, the tensile strength δb21 of the first area and the tensile strength δb22 of the second area meet δb1 > 6b22 > 6b21, where δb1 ≥ 800 MPa, and δb21 ≤ 450 MPa; and the ductility D1 of the coating area, the ductility D21 of the first area and the ductility D22 of the second area meet D21 > D22 > D1, where D21 ≥ 3%, and D1 ≤ 1%. In this case, based on a blank of the hard stainless steel, the first area may be obtained by complete annealing and the second area may be obtained by incomplete annealing, and it is easy to implement a method for forming the current collector. In addition, the occurrence of microcracks and other undesirable phenomena at the junction of the first area and second area is prevented, and a tab formed in the second area is not prone to be deformed by an external force, which helps to maintain the shape of the tab.

In some embodiments, in the preset direction, a width W1 of the first area and a width W2 of the second area meet 1/10 ≤ W1/W2 ≤ 1. When the ratio of W1/W2 is in the range of 1/10-1, the current collector has a better ability to prevent microcracks/crow's feet and other undesirable phenomena, and further better facilitates the forming of the tab.

In some embodiments, the current collector is formed wholly by the stainless steel current-collecting portion. In this case, the current collector is completely formed wholly by the stainless steel current-collecting portion, and the structure of the current collector is simpler.

In some embodiments, the current collector further includes a supporting portion; and the supporting portion is arranged on a side of the stainless steel current-collecting portion in a thickness direction. In this case, the supporting portion may be configured to reduce the weight of the current collector, which helps to achieve a lightweight design of the battery. In addition, material consumption for the stainless steel current-collecting portion can be reduced, and costs of metal consumables can be reduced.

In some embodiments, the coating area is located between two blank areas in the preset direction. In this case, production efficiency of the electrode plate can be improved.

In a second aspect, the present application provides an electrode plate, including an active material layer and the above current collector, where the active material layer is applied in a coating area.

In a third aspect, the present application provides a battery cell, including a shell and an electrode assembly, where the electrode assembly is accommodated in the shell, the electrode assembly includes a positive electrode plate, a separator, and a negative electrode plate, and the separator is arranged between the positive electrode plate and the negative electrode plate, where at least one of the positive electrode plate and the negative electrode plate is the above electrode plate.

In a fourth aspect, the present application provides a battery, including the above battery cell and a case, where the battery cell is accommodated in the case.

In a fifth aspect, the present application provides an electric device, including the above battery cell, where the battery cell is configured to provide electric energy.

The above description is merely a summary of the technical solutions of the present application. In order to allow the technical means of the present application to be understood clearly and implemented in accordance with the content of the specification and allow the above and other objectives, features, and advantages of the present application to be more obviously and easily understood, specific implementations of the present application are described below.

### BRIEF DESCRIPTION OF THE DRAWINGS

By reading the detailed description of the following preferred embodiments, various other advantages and benefits will be clear and apparent to those of ordinary skill in the art. The accompanying drawings are provided merely to illustrate the preferred embodiments, rather than to limit the present application. In the accompanying drawings, the same reference numerals represent the same components. In the accompanying drawings:
FIG. 1 is a schematic structural diagram of a vehicle in some embodiments of the present application;
FIG. 2 is a schematic structural diagram of a battery in some embodiments of the present application;
FIG. 3 is a schematic structural diagram of a battery cell in some embodiments of the present application;
FIG. 4 is a schematic structural diagram of a current collector in some embodiments of the present application from a top angle of view;
FIG. 5 is a schematic structural diagram of a current collector in some other embodiments of the present application from a top angle of view;
FIG. 6 is a schematic structural diagram of a current collector in some other embodiments of the present application from a top angle of view;
FIG. 7 is a schematic structural diagram of a current collector in some other embodiments of the present application from a top angle of view;
FIG. 8 is a schematic structural diagram of a current collector in some other embodiments of the present application from a top angle of view;
FIG. 9 is a schematic structural diagram of a current collector in some other embodiments of the present application from a top angle of view;
FIG. 10 is a schematic structural diagram of a current collector in some other embodiments of the present application from a top angle of view;
FIG. 11 is a schematic structural diagram of a current collector in some other embodiments of the present application from a top angle of view;
FIG. 12 is a schematic structural diagram of a current collector in some other embodiments of the present application from a top angle of view;
FIG. 13 is a schematic structural diagram of a current collector in some embodiments of the present application from a front angle of view;
FIG. 14 is a schematic structural diagram of a current collector in some other embodiments of the present application from a front angle of view; and
FIG. 15 is a schematic structural diagram of an electrode plate in some embodiments of the present application.

### Reference numerals in specific implementations are as follows:

1000. Vehicle; 100. Battery; 200. Controller; 300. Motor; 10. Case; 11. First part; 12. Second part; 20. Battery cell; 21. End cap; 21a. Electrode terminal; 22. Shell; 23. Electrode assembly; 23J. Electrode plate; J1. Current collector; J11. Stainless steel current-collecting portion; q. Blank area; q1. First area; q2. Second area; t. Coating area; J12. Supporting portion; J2. Active material layer; S1. Hard stainless steel; S2. Semi-hard stainless steel; S3. Soft stainless steel.

### DETAILED DESCRIPTION OF THE EMBODIMENTS

Embodiments of the technical solutions of the present application will be described in detail below with reference to the accompanying drawings. The following embodiments are used merely to clearly illustrate the technical solutions of the present application. Therefore, these embodiments are merely exemplary and are not intended to limit the protection scope of the present application.

Unless otherwise defined, all technical and scientific terms used herein have the same meanings as commonly understood by those skilled in the art of the present application. The terms used herein are merely intended to describe the specific embodiments, rather than limit the present application. The terms "include" and "have" in the specification, claims, and accompanying drawings of the present application and any variations thereof are intended to encompass without excluding other content.

In the description of the embodiments of the present application, the technical terms such as "first" and "second" are used merely to distinguish different objects, and cannot be understood as indicating or implying relative importance or implicitly indicating a number, a specific order, or a primary/secondary relationship of the indicated technical features. In the description of the embodiments of the present application, "a plurality of" means two or more, unless otherwise specifically defined.

The term "embodiment" mentioned herein means that a specific feature, structure, or characteristic described in combination with the embodiment may be included in at least one embodiment of the present application. The term appearing in different parts of the specification does not necessarily refer to the same embodiment or an independent or alternative embodiment exclusive of other embodiments. It may be explicitly or implicitly appreciated by those skilled in the art that the embodiments described herein may be combined with other embodiments.

In the description of the embodiments of the present application, the term "and/or" merely describes associations between associated objects, and it indicates three types of relationships. For example, A and/or B may indicate that A exists alone, A and B exist at the same time, or B exists alone. In addition, the character "/" herein generally indicates that the associated objects are in an "or" relationship.

In the description of the embodiments of the present application, the term "a plurality of" refers to two or more, and similarly, "a plurality of groups" refers to two or more groups and "a plurality of pieces" refers to two or more pieces.

In the description of the embodiments of the present application, the technical terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial direction", "radial direction" and "circumferential direction" are orientations or positional relationships shown based on the accompanying drawings. These terms are merely intended to facilitate description of the embodiments of the present application and make the description simple, rather than to indicate or imply that an apparatus or element referred to must have a specific orientation or be constructed and operated in the specific orientation. Therefore, these terms cannot be construed as a limitation to the embodiments of the present application.

In the description of the embodiments of the present application, unless otherwise clearly specified and defined, the technical terms such as "mount", "connected", "connection" and "fix" should be understood in a broad sense. For example, the "connection" may be a fixed connection, removable connection or integral connection; may be a mechanical connection or electrical connection; and may be a direct connection or indirect connection by means of an intermediate medium, or may be internal communication between two elements or an interaction relationship between two elements. Those of ordinary skill in the art may understand specific meanings of the above terms in the embodiments of the present application based on a specific situation.

Current collectors widely used for existing battery cells include copper current collectors and aluminum current collectors. Since the copper current collectors are prone to be oxidized at high potential, the copper current collectors are mainly used for negative electrodes with low potential. The aluminum current collectors are mainly used as cathode current collectors because of their severe corrosion problem at low potential. Existing current collectors cannot be used for positive electrodes and negative electrodes at the same time, and thus lack certain universality.

The inventors have noticed that in related technologies, a stainless steel substrate is used instead of a Cu/Al substrate to manufacture a current collector. Compared with the Cu/Al substrate, the stainless steel substrate has good oxidation resistance and cannot be co-embedded with Li ions and corroded under a service voltage of a battery cell, so that the current collector can be used for positive electrodes and negative electrodes. In addition, the inventors have also noticed that stainless steel with high hardness has a low cost, and has high strength, and thus the stainless steel cannot be easily pressed through when coated with a high-pressure and dense active material. However, if the hardness of the current collector is too high, since an edge blank area of the current collector is not coated with the active material, but only a middle area is coated with the active material, during rolling of the active material, only the middle area is extended by the roller pressure, while the edge area is not subjected to the roller pressure and thus is not extended, so that microcracks/crow's feet and other undesirable phenomena may be formed at the junction of the middle area and the edge area.

Based on the above considerations, in order to solve the problem of poor machinability of a stainless steel current-collecting portion, the inventor has designed a current collector after in-depth research. The current collector includes a stainless steel current-collecting portion for collecting a current, where the stainless steel current-collecting portion includes a blank area and a coating area that are arranged adjacent to each other in a preset direction, the coating area is configured to be coated with an active material layer, and the blank area has a hardness less than that of the coating area. In this case, the current collector may be coated with a cathode active material and an anode active material by means of the stainless steel current-collecting portion, can be used for both a cathode and an anode, and has good universality. In addition, since the blank area has a hardness less than that of the coating area, the blank area has a tensile strength less than that of the coating area and the blank area has a ductility better than that of the coating area, when the active material is rolled, although the blank area is not subjected to the roller pressure, the blank area has good ductility because of its low hardness, and thus can be extended with the coating area without forming microcracks, so the current collector has good machinability.

The current collector according to the embodiment of the present application can be used for manufacturing both a positive electrode plate and a negative electrode plate. An electrode plate prepared by the current collector according to the embodiment of the present application can be used to prepare a battery cell and a battery.

The battery cell and the battery disclosed in the embodiments of the present application can be used in, but not limited to, an electric device such as a vehicle, a ship or an aircraft. A power system of the electric device may be composed of the battery cell, the battery, and the like disclosed in the present application. The electric device may be, but is not limited to, a mobile phone, a tablet, a laptop, an electric toy, an electric tool, a battery driven vehicle, an electric vehicle, a ship, a spacecraft, and the like. The electric toy may include a stationary or mobile electric toy, such as a game console, an electric toy vehicle, an electric toy ship, and an electric toy airplane. The spacecraft may include an airplane, a rocket, a space shuttle, a spaceship, and the like.

For ease of description of the embodiments below, an example in which an electric device in an embodiment of the present application refers to a vehicle 1000 is used for description.

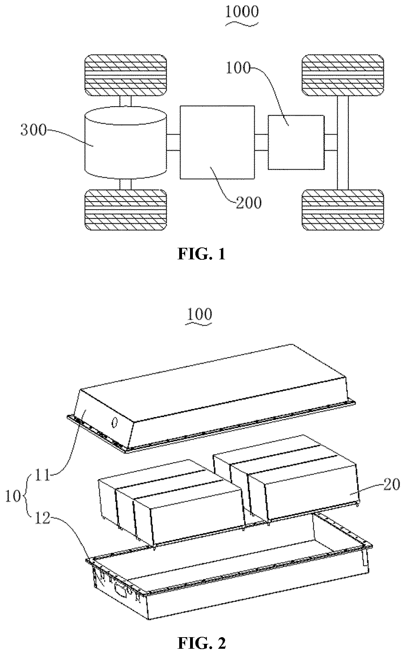

With reference to FIG. 1, FIG. 1 is a schematic structural diagram of a vehicle 1000 according to some embodiments of the present application. The vehicle 1000 may be a fuel vehicle, a gas vehicle, or a new energy vehicle, where the new energy vehicle may be a pure electric vehicle, a hybrid electric vehicle, a range-extended electric vehicle, or the like. A battery 100 is disposed inside a vehicle 1000, and the battery 100 may be disposed at a bottom, a head, or a tail of the vehicle 1000. The battery 100 may be configured to supply power to the vehicle 1000. For example, the battery 100 may be used as an operation power supply for the vehicle 1000. The vehicle 1000 may further include a controller 200 and a motor 300. The controller 200 is configured to control the battery 100 to supply power to the motor 300, and for example, is configured to meet working power requirements during starting, navigation and traveling of the vehicle 1000.

In some embodiments of the present application, the battery 100 may be used not only as an operation power supply for the vehicle 1000, but also as a drive power supply of the vehicle 1000, in place of or partly in place of fuel or natural gas to provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may have various structures. In some embodiments, the case 10 may include a first part 11 and a second part 12. The first part 11 and the second part 12 cover each other, and the first part 11 and the second part 12 jointly define the accommodating space for accommodating the battery cells 20. The second part 12 may have a hollow structure with one end open, the first part 11 may have a plate-like structure, and the first part 11 covers the open side of the second part 12, so that the first part 11 and the second part 12 jointly define the accommodating space; or the first part 11 and the second part 12 each may have a hollow structure with one side open, and the open side of the first part 11 covers the open side of the second part 12. Certainly, the case 10 formed by the first part 11 and the second part 12 may be in various forms, such as a cylinder and a cuboid.

In the battery 100, a plurality of battery cells 20 may be provided. The plurality of battery cells 20 may be connected in series, in parallel, or in series and parallel. The parallel-series connection means that the plurality of battery cells 20 are connected both in series and in parallel. The plurality of battery cells 20 may be directly connected in series or in parallel or in series and parallel, and then a whole of the plurality of battery cells 20 is accommodated in the case 10; or certainly, for the battery 100, the plurality of battery cells 20 may first be connected in series or in parallel or in series and parallel to form battery modules, and then a plurality of battery modules are connected in series or in parallel or in series and parallel to form a whole, which is accommodated in the case 10. The battery 100 may further include other structures. For example, the battery 100 may further include a bus part configured to achieve electrical connections between the plurality of battery cells 20.

Each battery cell 20 may be a secondary battery or a primary battery; and may further be a lithium-sulfur battery, a sodium-ion battery, or a magnesium ion battery, but the battery cell is not limited thereto. The battery cell 20 may be in the form of a cylinder, a flat body, a cuboid, or the like.

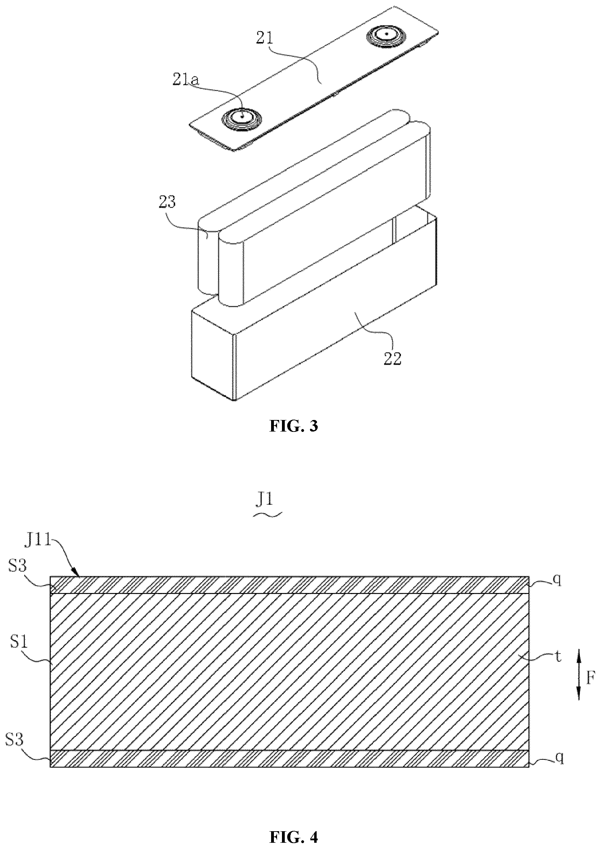

Referring to FIG. 3, FIG. 3 is a schematic exploded structural diagram of a battery cell 20 according to some embodiments of the present application. The battery cell 20 refers to a smallest unit that forms a battery. As shown in FIG. 3, the battery cell 20 includes an end cap 21, a shell 22, an electrode assembly 23, and other functional components.

The end cap 21 refers to a component that covers an opening of the shell 22 to isolate an internal environment of the battery cell 20 from an external environment. Without limitation, the shape of the end cap 21 may be adapted to the shape of the shell 22 so as to fit with the shell 22. Optionally, the end cap 21 may be made of a material (for example, an aluminum alloy) with certain hardness and strength, and thus the end cap 21 is not prone to be deformed when subjected to squeezing or collision, so that the battery cell 20 can have a higher structural strength, and the safety performance can also be improved. Functional components, such as an electrode terminal 21a, may be provided on the end cap 21. The electrode terminal 21a may be configured to electrically connect the electrode assembly 23 to output or input electric energy of the battery cell 20. In some embodiments, the end cap 21 may be further provided with a pressure relief mechanism configured to release an internal pressure when an internal pressure or a temperature of the battery cell 20 reaches a threshold. The end cap 21 may also be made of various materials, such as copper, iron, aluminum, stainless steel, an aluminum alloy and plastic, which is not particularly limited in the embodiments of the present application. In some embodiments, an insulation part may be further provided on an inner side of the end cap 21. The insulation part may be configured to isolate electrical connection components inside the shell 22 from the end cap 21 so as to reduce the risk of short circuit. For example, the insulation part may be made of plastic, rubber, and the like.

The shell 22 is an assembly that is configured to fit with the end cap 21 so as to create the internal environment of the battery cell 20, where the created internal environment may be configured to accommodate the electrode assembly 23, an electrolyte and other components. The shell 22 and the end cap 21 may be independent components, and the shell 22 may be provided with an opening, at which the end cap 21 covers the opening to create the internal environment of the battery cell 20. Without limitation, the end cap 21 and the shell 22 may also be integrated. Specifically, the end cap 21 and the shell 22 may first form a common connection surface before other components are placed into the shell, and then the end cap 21 covers the shell 22 when the interior of the shell 22 needs to be packaged. The shell 22 may have various shapes and various sizes, for example, in the form of a cuboid, a cylinder, a hexagonal prism, etc. Specifically, the shape of the shell 22 may be determined depending on the specific shape and size of the electrode assembly 23. The shell 22 may be made of various materials, such as copper, iron, aluminum, stainless steel, an aluminum alloy, and plastic, which is not particularly limited in the embodiments of the present application.

The electrode assembly 23 is a component, where an electrochemical reaction occurs, in the battery cell 20. The shell 22 may include one or more electrode assemblies 23 therein. The electrode assembly 23 is mainly formed by winding or stacking a positive electrode plate and a negative electrode plate, with a separator usually arranged between the positive electrode plate and the negative electrode plate. Parts of the positive electrode plate and the negative electrode plate that have an active material form a main body portion of the electrode assembly 23, and parts of the positive electrode plate and the negative electrode plate that have no active material each form a tab. The positive tab and the negative tab may be together located at an end of the main body portion or respectively at two ends of the main body portion. During a charge-discharge process of the battery cell, a cathode active material and an anode active material react with the electrolyte, and the tabs are connected to the electrode terminal 21a to form a current loop.

FIGS. 4, 5 and 6 are schematic structural diagrams of a current collector J1 in some different embodiments of the present application from a top angle of view, respectively.

According to some embodiments of the present application, referring to FIGS. 4, 5 and 6, the current collector J1 according to the present application includes a stainless steel current-collecting portion J11 for collecting a current, where the stainless steel current-collecting portion J11 includes a blank area q and a coating area t that are arranged adjacent to each other in a preset direction, the coating area t is configured to be coated with an active material, and the blank area q has a hardness less than that of the coating area t.

The stainless steel current-collecting portion J11 is configured to collect a current, be externally electrically connected, collect and output the current generated by the active material, and input an external current to the active material.

The stainless steel current-collecting portion J11 refers to a current-collecting portion made of a stainless steel material, which has the characteristics of stainless steel, such as good electrical conductivity, good oxidation resistance, and good corrosion resistance. Especially, the stainless steel current-collecting portion cannot be co-embedded with Li ions in a voltage environment of the battery 100, and can be used to prepare both positive electrode plates and negative electrode plates, and thus the current collector J1 has certain universality.

The stainless steel current-collecting portion J11 may be made of various types of stainless steel materials, and the type of the stainless steel material may be, but is not limited to, 304 stainless steel, 302 stainless steel, 316 stainless steel, 305 stainless steel, 384 stainless steel, 309 stainless steel, 310 stainless steel, 314 stainless steel, and 330 stainless steel. Specifically, the stainless steel material for preparing the stainless steel current-collecting portion J11 may be austenitic stainless steel, martensitic stainless steel, or ferritic stainless steel, which is not limited herein.

The preset direction may correspond to a width direction of the current collector J1. In actual application, the dimension of the current collector J1 in a length direction is usually greater than that in the width direction, and the blank area q and the coating area t extend in the length direction of the current collector J1.

The coating area t refers to an area coated with the active material. The blank area q refers to an area not coated with the active material, and is mainly configured to form a tab of the electrode plate 23J. The active material may be a cathode active material or an anode active material. Specifically, without limitation, the cathode active material includes lithium iron phosphate, lithium manganate, lithium cobaltate, a nickel-cobalt-manganese ternary material, and nickel-cobalt lithium aluminate. Specifically, without limitation, the anode active material includes natural graphite, artificial graphite, soft carbon, hard carbon, lithium titanate, a silicon-carbon composite material, and the like.

The blank area q has a hardness less than that of the coating area t, that is, the hardness of stainless steel in the coating area t is greater than that in the blank area q. It should be noted that the hardness of the first area q1, the hardness of the second area q2, the hardness of the blank area q and the hardness of the coating area t mentioned in the embodiments of the present application are based on the comparison of the same hardness type, and the hardness type may be a Rockwell hardness, a Vickers hardness, a Brinell hardness, or the like. A method for measuring the Rockwell hardness may be performed with reference to, but not limited to, Chinese national standard GB/T230.1 - 2018 Metallic Rockwell hardness test, a method for measuring the Vickers hardness may be performed with reference to, but not limited to, American Society for Testing and Materials (ASTM) E92-2017 Standard test methods for Vickers hardness and Knoop hardness of metallic materials, and the Brinell hardness may be measured with reference to, but not limited to, Chinese national standard GB/T231-84 Metallic materials - Brinell hardness test method.

Stainless steel with high hardness has a higher tensile strength and a lower ductility than stainless steel with low hardness. The stainless steel in the coating area t has a high hardness, and the stainless steel has a high tensile strength when coated with the active material, and can withstand, without being pressed through, the roller pressure applied when the high-pressure and dense active material is formed on the stainless steel. The stainless steel in the blank area q has a low hardness, a low tensile strength, and a high ductility. When the active material is rolled, the stainless steel in the blank area q is extended to a certain extent under the action of the roller pressure, the stainless steel in the blank area q can be extended as the stainless steel in the coating area t is extended, so that microcracks/crow's feet and other undesirable phenomena will not occur at the junction of the blank area q and the coating area t, and thus the current collector J1 has good machinability.

The above current collector J1 achieves a current collecting function by the stainless steel current-collecting portion J11, and the current collector may be configured to prepare both a positive electrode plate and a negative electrode plate due to the characteristics of the stainless steel current-collecting portion J11, so that the current collector J1 has certain universality. In addition, since the blank area q has a hardness less than that of the coating area t, the blank area q has a tensile strength less than that of the coating area t and the blank area q has a ductility better than that of the coating area t, when the active material is rolled, the blank area q can be extended as the coating area t is extended, and microcracks/crow's feet and other undesirable phenomena are not formed at the junction of the blank area q and the coating area t, so that the current collector J1 has good machinability.

Understandably, stainless steel with a higher hardness indicates a higher tensile strength and a lower ductility and malleability. The tensile strength refers to a maximum stress borne by a material before the material breaks. The ductility refers to the ability of plastic deformation of a material before the material fractures under a stress.

The measurement of the tensile strength involved in each embodiment of the present application can be performed with reference to the Chinese national standard GB/T 228-87 Metallic materials - Tensile testing method. The measurement of the ductility involved in each embodiment of the present application may be performed with reference to the Chinese national standard GB/T 15821-1995 Metallic coatings - Methods of measurement of ductility.

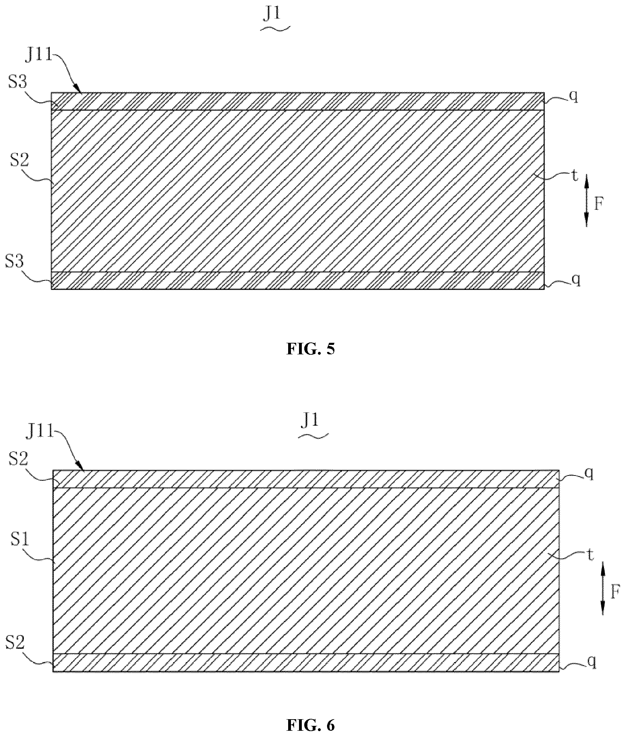

In some embodiments, referring to FIGS. 4 and 6, the coating area t has a tensile strength δb1 ≥ 800 MPa, and the coating area t has a ductility D1 ≤ 1%.

Stainless steel with a tensile strength not less than 800 MPa and a ductility not greater than 1% is referred to as hard stainless steel S1. The hard stainless steel S1 usually refers to stainless steel that has not been annealed. Since the hard stainless steel S1 has not been annealed, the hard stainless steel can have a high hardness, a high tensile strength and good compaction resistance, which helps to form a high-pressure and dense active material layer. Because the hard stainless steel has not been annealed, its preparation cost is low.

Specifically, the tensile strength δb1 of the coating area t may be 800 MPa, 820 MPa, 850 MPa, 880 MPa, 900 MPa, 920 MPa, 950 MPa, 980 MPa, 1000 MPa, and the like.

Specifically, the ductility D1 of the coating area t may be 1%, 0.9%, 0.8%, 0.7%, 0.6%, 0.5%, and the like.

In this case, stainless steel in the coating area t is hard stainless steel S1, the hard stainless steel S1 has a high hardness and a low preparation cost, which can improve compaction resistance of the current collector J1 and reduce the preparation cost.

In some embodiments, referring to FIGS. 4 and 5, the blank area q has a tensile strength 6b2 ≤ 450 MPa, and the blank area has a ductility D2 ≥ 3%.

Stainless steel with a tensile strength not greater than 450 MPa and a ductility not less than 3% is referred to as soft stainless steel S3. The soft stainless steel S3 usually refers to stainless steel that has been completely annealed. Since the soft stainless steel S3 has been completely annealed, the hardness of the soft stainless steel is greatly reduced compared with that of the hard stainless steel S1, and thus the tensile strength of the soft stainless steel is also greatly reduced, but the ductility is better improved.

Complete annealing is a process of annealing after a workpiece is heated to complete austenitizing. Specifically, the workpiece is heated to 30-50°C above a temperature Ac3 (which refers to a temperature at which ferrite is completely transformed into Austenite when heated), is kept at the temperature for a period of time and then is slowly cooled with a furnace, and the Austenite is transformed again during the cooling, so that the structure of steel can be refined. The complete annealing process is a conventional process in the art, and the details are not repeated herein.

Specifically, the tensile strength 6b2 of the blank area q may be 450 MPa, 420 MPa, 400 MPa, 380 MPa, 350 MPa, and the like.

Specifically, the ductility D2 of the blank area q may be 3%, 3.2%, 3.5%, 3.6%, 3.8%, 4.0%, 4.2%, 4.5%, and the like.

In this case, stainless steel in the blank area q is soft stainless steel S3, which has a good ductility. When the current collector J1 rolls the active material, the soft stainless steel S3 in the blank area q can extend as the stainless steel in the coating area t extends, which can effectively prevent the formation of microcracks/crow's feet and other undesirable phenomena at the junction of the blank area q and the coating area t. In addition, the stainless steel in the blank area q is the soft stainless steel S3, which has a low hardness, and is easier to cut during die-cutting in the blank area q to form a tab. In addition, during welding, the soft stainless steel S3 needs low welding energy and is easier to weld. Therefore, the tab made of the soft stainless steel S3 is easier to weld.

Referring to FIG. 4, in the embodiment shown in FIG. 4, the stainless steel in the coating area t is hard stainless steel S1, and the stainless steel in the blank area q is soft stainless steel S3. In actual application, the current collector J1 may be first made of hard stainless steel S1, and then partially completely annealed to form soft stainless steel S3, with completely annealed areas forming a blank area q and an unannealed area forming a coating area t. Partial annealing is a conventional means in the art, and thus is not repeated herein.

The stainless steel in the coating area t and the stainless steel in the blank area q may also be stainless steel in other states, provided that there is a relationship therebetween in which the hardness of the coating area t is greater than that of the blank area q.

Stainless steel with a tensile strength greater than 450 MPa and less than 800 MPa and a ductility greater than 1% and less than 3% is referred to as semi-hard stainless steel S2. The hardness of the semi-hard stainless steel S2 is less than that of the hard stainless steel S1 and greater than that of the soft stainless steel S3. The semi-hard stainless steel S2 may be prepared by incomplete annealing treatment of the hard stainless steel S1.

Incomplete annealing is a process of heating a workpiece to semi-austenitizing for annealing. Specifically, steel is heated to 30-50°C above a temperature Ac1 (which refers to a starting temperature of pearlite transformation to austenite during heating, and is less than the temperature Ac3), is kept at the temperature for enough time, and then is slowly cooled with a furnace. Since incomplete annealing is implemented by heating in a two-phase region, the structure cannot be completely recrystallized, the morphology, size and distribution of ferrite cannot be changed, the effect of grain refinement is not as good as that of complete annealing, and a degree of hardness reduction of the semi-hard stainless steel is less than that of the soft stainless steel S3. In addition, since the annealing temperature (temperature Ac1) of the semi-hard stainless steel is less than the annealing temperature (temperature Ac3) of the soft stainless steel S3, its energy consumption for annealing is less than that of the soft stainless steel S3, that is, the preparation cost of the semi-hard stainless steel S2 is less than that of the soft stainless steel S3.

In some embodiments, as shown in FIGS. 5 and 6, the stainless steel in the coating area t is semi-hard stainless steel S2, or the stainless steel in the blank area q is semi-hard stainless steel S2. Specifically, in the embodiment shown in FIG. 5, the stainless steel in the coating area t is semi-hard stainless steel S2, and the stainless steel in the blank area q is soft stainless steel S3. In the embodiment shown in FIG. 6, the stainless steel in the coating area t is hard stainless steel S1, and the stainless steel in the blank area q is semi-hard stainless steel S2.

In the embodiments shown in FIGS. 5 and 6, the stainless steel in the coating area t has a hardness greater than that of the stainless steel in the blank area q, the blank area q has a tensile strength less than that of the coating area t, and the blank area q has a ductility better than that of the coating area t, so that when the active material is rolled, the blank area q can be extended as the coating area t is extended, and microcracks/crow's feet and other undesirable phenomena are not formed at the junction of the blank area q and the coating area t, so that the current collector J1 has good machinability.

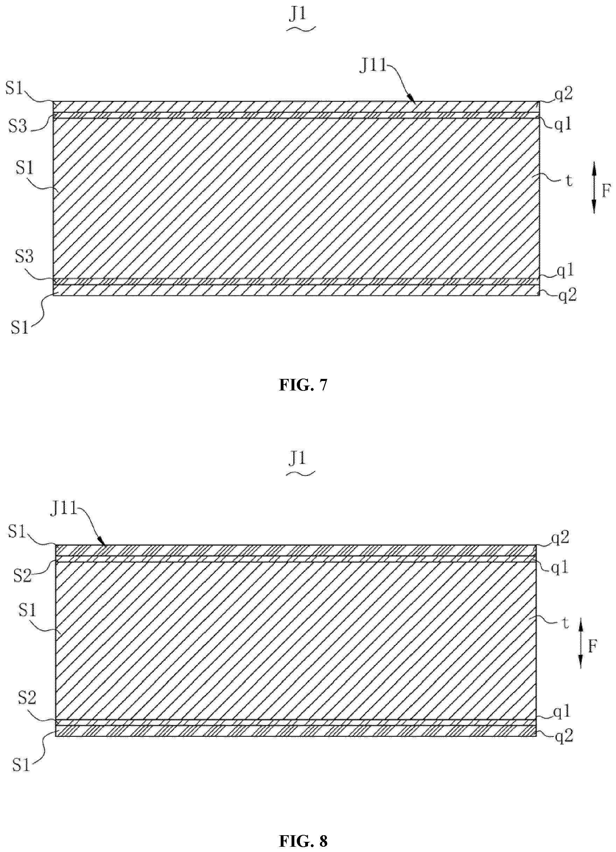

FIGS. 7 to 12 are schematic structural diagrams of a current collector J1 in some other different embodiments of the present application from a top angle of view, respectively.

In some embodiments, the blank area q includes a first area q1 and a second area q2 that are arranged adjacent to each other in a preset direction, where the first area q1 is connected between the coating area t and the second area q2. The first area q1 has a hardness different from that of the second area q2, and the first area q1 has a hardness less than that of the coating area t.

In the preset direction, when the blank area q is adjacent to only one coating area t, the blank area q may include only one first area q1 and one second area q2; or when the blank area q is adjacent to two coating areas t, the blank area q may include two first areas q1 and one second area q2, and there is one first area q1 between the second area q2 and any adjacent coating area t. In actual application, both the first area q1 and the second area q2 may extend in the length direction of the current collector J1.

The first area q1 has a hardness different from that of the second area q2, that is, the first area q1 may have a hardness greater than that of the second area q2, or the first area q1 may have a hardness less than that of the second area q2.

When the first area q1 has a hardness less than that of the coating area t, it indicates that the first area q1 has a ductility greater than that of the coating area t, and the first area q1 has a tensile strength less than that of the coating area t.

When the active material applied in the coating area t is rolled, the coating area t may be extended to a certain extent under the action of the rolling pressure, and the first area q1 with a higher ductility may allow its own one side connected to the coating area t to be extended as the coating area t is extended, and allow its own the other side connected to the second area q2 to be extended or not to be extended, thereby preventing the formation of microcracks/crow's feet and other undesirable phenomena at the junction of the second area q2 and the coating area t, and improving the machinability of the current collector J1.

In this case, the current collector J1 can perform, only by changing the hardness of the first area q1, improvement against microcracks/crow's feet and other undesirable phenomena that are prone to occur at the junction of the blank area q and the coating area t during rolling, the hardness of the stainless steel in the second area q2 can be flexibly set, and the arrangement of the current collector J1 is more flexible.

In some embodiments, the second area q2 has a same hardness as the coating area t. The second area q2 has a same hardness as the coating area t, and hardness reduction treatment (complete annealing treatment or incomplete annealing treatment) may be performed on the stainless steel blank only in the first area q1 based on the same stainless steel blank, so that the current collector J1 is easier to process and has a lower cost.

In some embodiments, a tensile strength 6b22 of the second area q2 and a tensile strength δb1 of the coating area t meet 6b22 = δb1 > 450 MPa; and a ductility D22 of the second area q2 and a ductility D1 of the coating area t meet D22 = D1 < 3%.

When the tensile strength is greater than 450 MPa and the ductility is less than 3%, the stainless steel may be hard stainless steel S1 or semi-hard stainless steel S2. As described in the above embodiments, the hard stainless steel S1 refers to stainless steel with a tensile strength not less than 800 MPa and a ductility not greater than 1%, and the semi-hard stainless steel S2 refers to stainless steel with a tensile strength greater than 450 MPa and less than 800 MPa and a ductility greater than 1% and less than 3%. In this case, the stainless steel in the second area q2 and the stainless steel in the coating area t may be both hard stainless steel S1, or may be both semi-hard stainless steel S2.

As described in the above embodiment, the soft stainless steel S3 refers to stainless steel with a tensile strength not greater than 450 MPa and a ductility not less than 3%.

When the stainless steel in the second area q2 and the stainless steel in the coating area t are both hard stainless steel S1, the stainless steel in the first area q1 may be semi-hard stainless steel S2 or soft stainless steel S3. In the embodiment shown in FIG. 7, when the stainless steel in the second area q2 and the stainless steel in the coating area t are both hard stainless steel S 1, the stainless steel in the first area q1 is soft stainless steel S3. In the embodiment shown in FIG. 8, when the stainless steel in the second area q2 and the stainless steel in the coating area t are both hard stainless steel S1, the stainless steel in the first area q1 is semi-hard stainless steel S2.

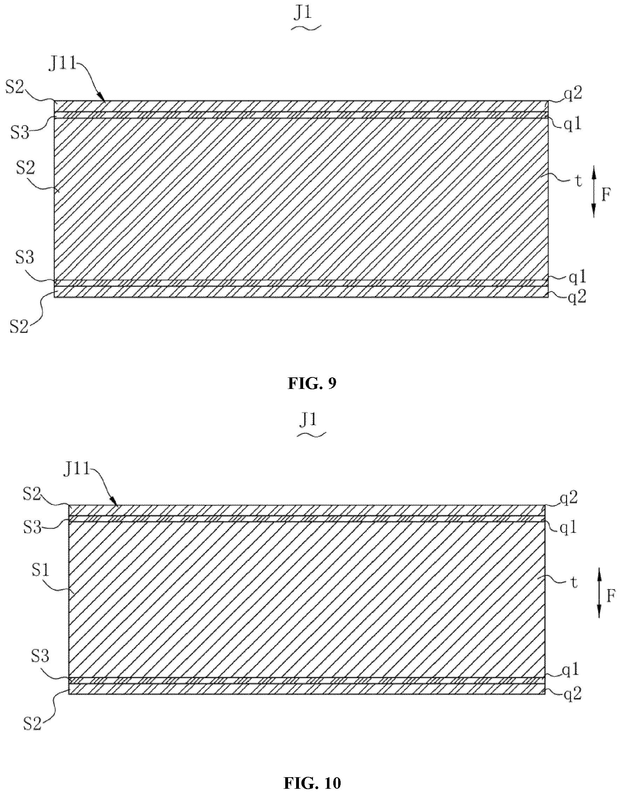

When the stainless steel in the second area q2 and the stainless steel in the coating area t are both semi-hard stainless steel S2, the stainless steel in the first area q1 is soft stainless steel S3, in the embodiment shown in FIG. 9.

In this case, the second area q2 has a same hardness as the coating area t. During actual processing, hardness reduction treatment (complete annealing treatment or incomplete annealing treatment) may be performed only on a part of the first area q1 based on a stainless steel blank, and the current collector J1 is easier to prepare and has a lower cost.

In some embodiments, the hardness of the first area q1 < the hardness of the second area q2 < the hardness of the coating area t.

In terms of hardness and tensile strength, the coating area t, the second area q2 and the first area q1 decrease in sequence; and in terms of ductility, the coating area t, the second area q2 and the first area q1 increase in sequence. In this case, the second area q2 has a ductility greater than that of the coating area t, and has a tensile strength greater than that of the first area q1.

During rolling of the active material, when a side of the first area q1 connected to the coating area t is extended as the coating area t is extended, a side of the first area q1 connected to the second area q2 may transmit an extension force to the second area q2. In this case, the second area q2 has certain ductility and can be extended to a certain extent as the first area q1 is extended, which helps to prevent the occurrence of microcracks and other undesirable phenomena at the junction of the first area q1 and the second area q2. In this case, the second area q2 has a tensile strength greater than that of the first area q1, so that the second area q2 has a weaker ability to be deformed by an external force, and the second area q2 is mainly configured to form a tab. In this way, the tab is not prone to be deformed by the external force, which helps to maintain the shape of the tab.

In some embodiments, the tensile strength δb1 of the coating area t, the tensile strength δb21 of the first area q1 and the tensile strength 6b22 of the second area q2 meet δb1 > 6b22 > 6b21, where δb1 ≥ 800 MPa, and δb21 ≤ 450 MPa; and the ductility D1 of the coating area t, the ductility D21 of the first area q1 and the ductility D22 of the second area q2 meet D21 > D22 > D1, where D21 ≥ 3%, and D1 ≤ 1%.

It can be learned from the description of the above embodiments that stainless steel with a tensile strength not less than 800 MPa and a ductility not greater than 1% is hard stainless steel S1, stainless steel with a tensile strength not greater than 450 MPa and a ductility not less than 3% is soft stainless steel S3, and stainless steel with a tensile strength greater than 450 MPa and less than 800 MPa and a ductility greater than 1% and less than 3% is semi-hard stainless steel S2.

In the embodiment shown in FIG. 10, the stainless steel in the first area q1 may be soft stainless steel S3, the stainless steel in the second area q2 may be semi-hard stainless steel S2, and the stainless steel in the coating area t may be hard stainless steel S1. In actual application, based on a blank of the hard stainless steel S1, the first area q1 may be completely annealed and the second area q2 may be incompletely annealed, so that the current collector J1 with the stainless steel in the first area q1 being soft stainless steel S3, the stainless steel in the second area q2 being semi-hard stainless steel S2 and the stainless steel in the coating area t being hard stainless steel S1 can be obtained.

In this case, based on the blank of the hard stainless steel S1, the first area q1 may be obtained by complete annealing and the second area q2 may be obtained by incomplete annealing, and it is easy to implement a method for forming the current collector J1. In addition, the occurrence of microcracks and other undesirable phenomena at the junction of the first area q1 and second area q2 is prevented, and a tab formed in the second area q2 is not prone to be deformed by an external force, which helps to maintain the shape of the tab.

In other embodiments, alternatively, the hardness of the second area q2 < the hardness of the first area q1 < the hardness of the coating area t. In this case, the second area q2 has the minimum hardness, the maximum ductility and the minimum tensile strength. When the second area q2 needs to be die-cut to form a tab, and when the second area q2 has a low hardness, cutter wear or laser power during the tab forming can be reduced, and the tab welding difficulty can also be reduced.

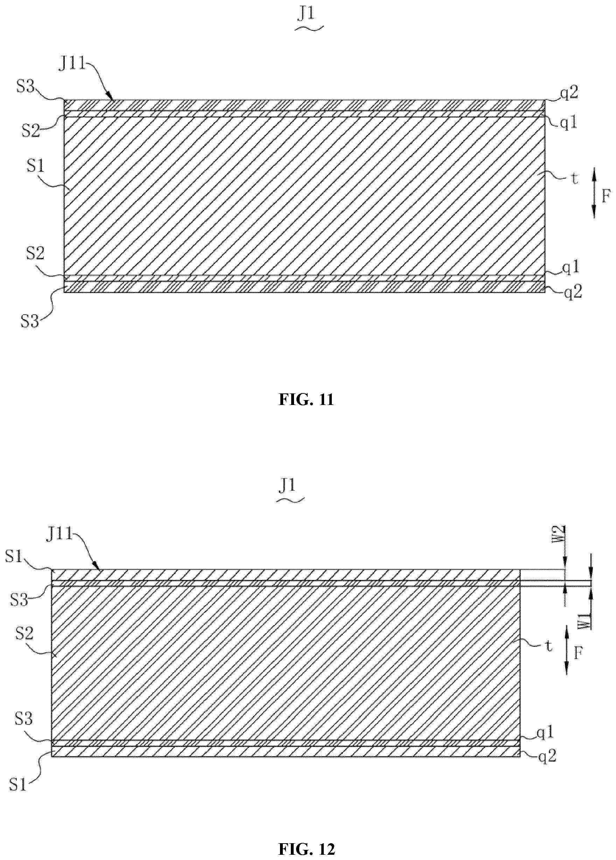

Specifically, in the embodiment shown in FIG. 11, the stainless steel in the second area q2 may be soft stainless steel S3, the stainless steel in the first area q1 may be semi-hard stainless steel S2, and the stainless steel in the coating area t may be hard stainless steel S1.

In this case, based on the blank of the hard stainless steel S1, the first area q1 may be obtained by incomplete annealing and the second area q2 may be obtained by complete annealing, and it is easy to implement a method for forming the current collector J1. In addition, the occurrence of microcracks and other undesirable phenomena at the junction of the first area q1 and second area q2 is prevented, cutter wear or laser power during the tab forming in the second area q2 can be further reduced, and the tab welding difficulty can be reduced.

In other embodiments, alternatively, the second area q2 has a hardness greater than that of the coating area t. The second area q2 has a hardness greater than that of the coating area t, that is, the second area q2 has a strength greater than that of the coating area t, which is suitable for applications requiring a high strength of the second area q2.

Specifically, a tensile strength δb22 of the second area q2 and a tensile strength δb1 of the coating area t may meet δb22 > δb1 > 450 MPa, and δb22 ≥ 800 Mpa; and a ductility D22 of the second area q2 and a ductility D1 of the coating area t may meet D22 < D1 < 3%, and D22 ≤ 1%. In the embodiment shown in FIG. 12, the stainless steel in the first area q1 is soft stainless steel S3, the stainless steel in the second area q2 is hard stainless steel S1, and the stainless steel in the coating area t is semi-hard stainless steel S2. In this case, based on the blank of the hard stainless steel S1, the coating area t may be obtained by incomplete annealing and the first area q1 may be obtained by complete annealing.

In some embodiments, referring to FIG. 12, in the preset direction, a width W1 of the first area q1 and a width W2 of the second area q2 meet 1/10 ≤ W1/W2 ≤ 1.

Specifically, the ratio of W1/W2 may be 0.1, 0.2, 0.3, 0.4, 0.5, 0.6, 0.7, 0.8, 0.9, 1, or the like.

A smaller ratio of W1/W2 indicates a larger width of the second area q2, and the second area q2 is mainly configured to form a tab. In this case, a large width of the second area q2 better facilitates the forming of the tab. A larger ratio of W1/W2 indicates a larger width of the first area q1, and the first area q1 is mainly configured to prevent the formation of microcracks/crow's feet and other undesirable phenomena between the blank area q and the coating area t. A larger width of the first area q1 indicates a lower probability of forming microcracks/crow's feet and other undesirable phenomena at the junction of the blank area q and the coating area t.

Tests show that when the ratio of W1/W2 is in the range of 1/10-1, the current collector J1 has a better ability to prevent microcracks/crow's feet and other undesirable phenomena, and further better facilitates the forming of the tab.

Further, the ratio of W1/W2 ranges from 1:4 to 1:5. In this case, the current collector J1 has a better ability to prevent microcracks/crow's feet and other undesirable phenomena, and facilitates the forming of the tab.

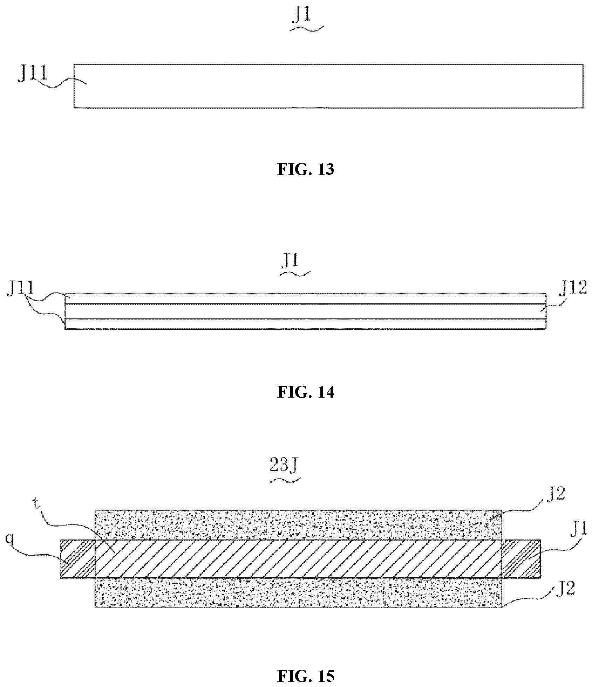

FIG. 13 is a schematic structural diagram of a current collector J1 in some embodiments of the present application from a front angle of view. FIG. 14 is a schematic structural diagram of a current collector J1 in some other embodiments of the present application from a front angle of view.

In some embodiments, referring to FIG. 13, the current collector J1 is formed wholly by the stainless steel current-collecting portion J11.

The current collector J1 is formed wholly by the stainless steel current-collecting portion J11, which means that the current collector J1 includes only the stainless steel current-collecting portion J11, that is, the current collector J1 has a pure metal structure.

Specifically, the current collector J1 may be made of stainless steel materials with the same composition, and the stainless steel materials with the same composition mean being formed by the same stainless steel blank, such as a 304 stainless steel blank or a 316 stainless steel blank. The hard stainless steel S1, the semi-hard stainless steel S2 and the soft stainless steel S3 may be structural representations based on the same stainless steel composition under different treatment processes.

Certainly, the current collector J1 may alternatively be made of stainless steel materials with different compositions. For example, the current collector J1 includes a first stainless steel layer and a second stainless steel layer. The first stainless steel layer and the second stainless steel layer are stacked and connected (which may be specifically by means of hot pressing connection, fastening connection, welding, or the like) in a thickness direction of the current collector J1. The first stainless steel layer and the second stainless steel layer have different materials (which may be 304 stainless steel and 316 stainless steel respectively). The first stainless steel layer and the second stainless steel layer each have a coating area t, a first area q1, and a second area q2. The respective coating areas T, the respective first areas q1 and the respective second areas q2 have structures based on the same composition and different treatment processes.

In this case, the current collector J1 is completely formed wholly by the stainless steel current-collecting portion J11, and the structure of the current collector J1 is simpler.

In some embodiments, the current collector J1 further includes a supporting portion J12, and the supporting portion J12 is arranged on a side of the stainless steel current-collecting portion J11 in a thickness direction.

The thickness direction of the stainless steel current-collecting portion J11 is the same as the thickness direction of the current collector J1. The supporting portion J12 is of a structure for supporting the stainless steel current-collecting portion J11, and may be a polymer supporting portion, a ceramic supporting portion, or the like. The polymer supporting portion may be a polyethylene supporting portion, a polyethylene terephthalate supporting portion, or the like, and the ceramic supporting portion may be an alumina ceramic supporting portion. Specifically, the supporting portion J12 may be in the shape of a film.

The supporting portion J12 is secured to the stainless steel current-collecting portion J11 by bonding or press-fitting connection, which is specifically not limited. When the stainless steel current-collecting portion J11 is arranged on one side of the supporting portion J12, the current collector J1 may be used as a unipolar current collector J1, or when stainless steel current-collecting portions J11 are arranged on two sides of the supporting portion J12, the current collector J1 may be used as a bipolar current collector J1.

The supporting portion J12 may be configured to reduce the weight of the current collector J1, which helps to achieve a lightweight design of the battery 100. In addition, material consumption for the stainless steel current-collecting portion J11 can be reduced, and costs of metal consumables can be reduced.

In some embodiments, the coating area t is located between two blank areas q in the preset direction. During actual preparation, the coating area t of a wider current collector J1 may be often coated with an active material to form an electrode plate blank, and then the electrode plate blank is cut into at least two electrode plates 23J along the length of the coating area t, so that each electrode plate 23J has a coating area t coated with the active material and blank areas q, that is, the production efficiency of the electrode plates 23J can be improved.

In an embodiment of the present application, the current-collecting portion includes a stainless steel current-collecting portion J11, where the stainless steel current-collecting portion J11 includes a blank area q and a coating area t that are arranged adjacent to each other in a preset direction. Stainless steel in the blank area q and stainless steel in the coating area t have the same stainless steel composition, the stainless steel in the blank area q is soft stainless steel S3, and the stainless steel in the coating area t is hard stainless steel S1.

In a second aspect, the present application provides an electrode plate 23J. Referring to FIG. 15, the electrode plate 23J according to some embodiments of the present application includes an active material layer J2 and the above current collector J1, where the active material layer J2 is applied in a coating area t. The active material layer J2 is a layer structure formed by rolling after the current collector J1 is coated with an active material. For a type of the active material involved in the active material layer J2, reference may be made to the descriptions in the above embodiments, and details will not be described herein again. Since the electrode plate 23J includes the above current collector J1, the electrode plate includes all the beneficial effects of the above current collector J1, and details will not be described herein again.

In a third aspect, an embodiment of the present application provides a battery cell 20, including a shell 22 and an electrode assembly 23. The electrode assembly 23 is accommodated in the shell 22. The electrode assembly 23 includes a positive electrode plate, a separator and a negative electrode plate, and the separator is arranged between the positive electrode plate and the negative electrode plate. At least one of the positive electrode plate and the negative electrode plate is the above electrode plate 23J. This battery cell 20 has all the beneficial effects of the above current collector J1.

When the positive electrode plate is the above electrode plate 23J, the coating area t of its current collector J1 is coated with a cathode active material. When the negative electrode plate is the above electrode plate 23J, the coating area t of its current collector J1 is coated with an anode active material. The separator is configured to separate the positive electrode plate from the negative electrode plate, to prevent short circuit caused by contact between the two electrodes, and to allow electrolyte ions to pass through. The separator may be, but is not limited to, a polyolefin porous membrane, which is a commonly used component in the art and is not limited herein.

In a fourth aspect, an embodiment of the present application provides a battery 100, including the above battery cell 20 and a case 10, where the battery cell 20 is accommodated in the case 10.

In a fifth aspect, an embodiment of the present application provides an electric device, including the above battery cell 20, where the battery cell 20 is configured to provide electric energy.

The technical features of the above embodiments can be arbitrarily combined. To make the description concise, none of all possible combinations of the technical features in the above embodiments are described. However, provided that no contradiction occurs between the combinations of these technical features, the combinations should be considered as falling within the scope of this specification.

Only several implementations of the present application are described in detail in the above embodiments, but the several implementations should not be construed as limiting the claims of the present application. It should be noted that those of ordinary skill in the art can further make variations and improvements without departing from the conception of the present application. These variations and improvements all fall within the protection scope of the present application. Therefore, the protection scope of the present application should be subject to the appended claims.

## Claims

1. A current collector, comprising a stainless steel current-collecting portion for collecting a current, wherein
the stainless steel current-collecting portion comprises a blank area and a coating area that are arranged adjacent to each other in a preset direction, the coating area is configured to be coated with an active material, and the blank area has a hardness less than that of the coating area.

2. The current collector according to claim 1, wherein the coating area has a tensile strength δb1 ≥ 800 MPa, and the coating area has ductility D1 ≤ 1%.

3. The current collector according to claim 1 or 2, wherein the blank area has a tensile strength δb2 ≤ 450 MPa, and the blank area has a ductility D2 ≥ 3%.

4. The current collector according to claim 1, wherein the blank area comprises a first area and a second area that are arranged adjacent to each other in the preset direction, and the first area is connected between the coating area and the second area; and
wherein the first area has a hardness different from that of the second area, and the first area has a hardness less than that of the coating area.

5. The current collector according to claim 4, wherein the second area has a same hardness as the coating area.

6. The current collector according to claim 5, wherein a tensile strength δb22 of the second area and a tensile strength δb1 of the coating area meet δb22 = δb1 > 450 MPa; and
a ductility D22 of the second area and a ductility D1 of the coating area meet D22 = D1 < 3%.

7. The current collector according to claim 4, wherein the hardness of the first area < the hardness of the second area < the hardness of the coating area.

8. The current collector according to claim 7, wherein
the tensile strength δb1 of the coating area, the tensile strength δb21 of the first area and the tensile strength 6b22 of the second area meet δb1 > 6b22 > 6b21, wherein δb1 ≥ 800 MPa, and δb21 ≤ 450 MPa; and
the ductility D1 of the coating area, the ductility D21 of the first area and the ductility D22 of the second area meet D21 > D22 > D1, wherein D21 ≥ 3%, and D1 ≤ 1%.

9. The current collector according to any one of claims 4 to 8, wherein in the preset direction, a width W1 of the first area and a width W2 of the second area meet 1/10 ≤ W1/W2 ≤ 1.

10. The current collector according to any one of claims 1 to 9, wherein the current collector is formed wholly by the stainless steel current-collecting portion.

11. The current collector according to any one of claims 1 to 9, wherein the current collector further comprises a supporting portion; and
the supporting portion is arranged on a side of the stainless steel current-collecting portion in a thickness direction.

12. The current collector according to any one of claims 1 to 11, wherein the coating area is located between two blank areas in the preset direction.

13. An electrode plate, comprising:
an active material layer; and
the current collector according to any one of claims 1 to 12, wherein the active material layer is applied in the coating area.

14. A battery cell, comprising:
a shell; and
an electrode assembly accommodated in the shell, wherein the electrode assembly comprises a positive electrode plate, a separator and a negative electrode plate, and the separator is arranged between the positive electrode plate and the negative electrode plate;
wherein at least one of the positive electrode plate and the negative electrode plate is the electrode plate according to claim 13.

15. A battery, comprising:
the battery cell according to claim 14; and
a case, wherein the battery cell is accommodated in the case.

16. An electric device, comprising the battery cell according to claim 14, wherein the battery cell is configured to supply electric energy.
